# EUROPEAN PATENT APPLICATION

(11) **EP 1 583 185 A2**
(43) Date of publication of application: **05.10.2005**
(21) Application number: 05006909.5
(22) Date of filing: 30.03.2005
(51) Int. Cl.: H01S 3/00

(54) **Laser with axially symmetric laser beam profile**

(30) Priority: 31.03.2004 JP 2004104783
(71) Applicant: FANUC LTD, Yamanashi 401-0597 (JP)
(72) Inventor: Mori, Atsushi, Minamitsuru-gun Yamanashi 401-0301 (JP); Egawa, Akira, Gotenba-shi Shizuoka 412-0043 (JP)
(74) Representative: Schmidt, Steffen J.

(57) **Abstract**

A laser oscillator that can suppress astigmatism and achieve an axially symmetric laser beam output profile even when a spherical mirror is inserted between an output mirror (1) and a rear mirror (2). Turning mirrors (3,4,5) (plane mirrors) and spherical mirrors (4,5) are arranged between the output mirror (1) and the rear mirror (2) so as to provide a zigzag round-trip optical path where the optical axes cross in the same plane. This configuration achieves the same effect as if lenses were arranged between the ends of a very long resonator, and the light-gathering performance of the laser beam may be controlled by the output mirror, the rear mirror and the curvatures of the respective turning mirrors. The positions and orientations of the spherical mirrors (4,5) are determined so that the planes formed by the optical axis of the incident laser beam and the optical axis of the reflected laser beam on the respective spherical mirrors are perpendicular to each other, thereby offsetting the astigmatism and preventing the axial symmetry of the output laser beam profile from degrading. The angle of incidence of the laser beam axis on each spherical mirror may be set to 22.5 degrees or larger. Further, the turning mirrors may be replaced by a slab crystal.

## Description

### BACKGROUND OF THE INVENTION

### 1. Field of the Invention

The present invention relates to a laser oscillator which comprises a resonator having a turning mirror for turning or reflecting a laser beam axis and, more particularly, to a high-power laser oscillator having a gaseous or solid laser medium and usable for thermal processing such as laser welding and laser cutting.

### 2. Description of the Related Art

Laser oscillators of various configurations have been proposed in the prior art, and some of them have been commercially implemented. Several methods are known for high-power laser oscillators having powers ranging from several tens of watts to several megawatts. A common type of laser oscillator can be found, for example, in Japanese Unexamined Patent Publication No. 61-198694 (in particular, refer to Fig. 1 in the patent document). As is known, in high-power lasers there is a tendency to increase the resonance length of the laser resonator in order to increase the output power. In the laser oscillator disclosed in the above-cited patent document, the resonance length is increased by using deflection mirrors 6 and 7 (refer to Fig. 1 in the cited document). That is, an optical resonator is generally constructed by disposing an output mirror for extracting laser output and a rear mirror in such a manner as to face each other; here, by adding turning mirrors (sometimes called deflection mirrors), the long resonator is folded so that a high output power can be obtained from an apparently small oscillator. The turning mirrors used for this purpose are usually plane mirrors.

One known type of high-power laser oscillator is the so-called carbon dioxide laser. The carbon dioxide laser uses, as the laser medium, a gas mixture containing a few percent of CO₂, and is constructed by hermetically sealing the medium in a discharge tube (glass tube) disposed between mirrors. Electrodes are arranged at both ends of the discharge tube, and when a high voltage is applied, the laser medium is excited, causing light to travel back and forth between the rear mirror and the output mirror, and thus achieving oscillation of the laser. The laser oscillator is provided with a high-voltage power supply for applying a high voltage to the discharge tube and a cooling system for removing excess heat from the laser medium, etc. Besides gas lasers, including the above-described carbon dioxide laser, that use gas as the laser medium, solid lasers such as a YAG laser that use a solid as the laser medium are also used as high-power laser oscillators.

If the output powers of such lasers are to be increased, the capacity (volume) of the laser medium must be increased, as there is a limit to the amount of laser light amplification per unit area of the medium (gas or solid). To increase the capacity of the medium, (1) the cross-sectional area of the part through which the laser light is allowed to pass, i.e., the aperture diameter, is increased, (2) the distance between the output mirror and the rear mirror, i.e., the length of the resonator, is increased, or, (3) these two means (1) and (2) are used in combination.

On the other hand, the quality of laser processing, whether it be laser cutting or laser welding, largely depends on the light-gathering performance of the laser beam. Even when the output laser light is gathered in an environment where conditions such as the focal length of the light-gathering lens are made the same, the beam diameter at the light-gathering point may differ from one laser oscillator to another. This difference is caused by the variation in output beam quality (light-gathering performance: a measure of how easily the light can be gathered by the light-gathering lens) among the laser oscillators. Major factors that determine the light-gathering performance of the laser beam are the length of the resonator, the diameter of the aperture, and the curvature radii of the output mirror and rear mirror.

Generally, it is believed that, to achieve a laser beam of good light-gathering performance, it is advantageous to increase the length of the resonator, reduce the diameter of the aperture, and increase the curvature radii of the output mirror and rear mirror. Previously, it was thought that a laser beam called a Gaussian beam, which achieves the best light-gathering performance in theory, is suitable, in particular, for laser cutting. Accordingly, in high-power laser oscillators for laser processing applications, the trend was to increase the length of the resonator indiscriminately without increasing the aperture diameter. However, with recent advances in laser processing technology, it has been found that, in laser cutting also, the Gaussian beam is not necessarily the best choice, but meticulously controlling the light-gathering performance is effective in enhancing the laser processing performance.

Control of the light-gathering performance can be accomplished by adjusting the above-stated resonator parameters (the length of the resonator, the diameter of the aperture, and the curvature radii of the output mirror and rear mirror), but meticulously adjusting these parameters involve the following difficulties. For example, in the case of a fast axial-flow gas laser, if the aperture diameter of the laser resonator is to be altered, the diameter of the discharge tube must be altered. As a result, high voltage application conditions change, and it becomes necessary to redesign the power supply. The same is true when altering the electrode width. The peripheral portion of the laser beam may be cut off by making use of the aperture, but in that case, the cut off portion results in a loss, and the efficiency of the laser oscillator drops. Next comes the resonator length; to change the resonator length, the design of the resonator must be redone, and this involves a major modification including the modification of the cooling system. On the other hand, altering the curvatures of the output mirror and rear mirror is relatively easy, but as is known, there is a limit to how far they can be adjusted.

In view of this, attempts have been made to change the light-gathering performance without changing the length of the resonator or the diameter of the aperture, by applying optical means to portions other than the output mirror and the rear mirror. For example, Japanese Unexamined Patent Publication No. 2001-274491 describes a method that alleviates the problem associated with making the resonator too long in a solid laser as an example of a high-power laser, by adding lenses at intermediate positions along the path of the resonator. Further, Japanese Unexamined Patent Publication No. 2002-118312 discloses a proposal that the light-gathering performance be changed by adding spherical mirrors, rather than lenses, at intermediate positions along the path of the resonator.

Of the above two proposals, the latter proposal has some difficulty in application to high-power lasers. The reason is that, in a high-power laser, the power density of the laser beam traveling back and forth in the resonator becomes extremely high, and it is not appropriate to insert, in such a position, a transmissive optical component such as a lens that is thought to be less resistant to light than a reflective mirror is. For example, in the case of a carbon dioxide laser with an output power of 3 kW, the intensity of the laser light traveling toward the output mirror will become as high as 6 kW, and each turning mirror disposed at an intermediate position will be exposed to laser light radiation amounting to 9.5 kW with the light traveling toward the output mirror being combined with the light traveling toward the rear mirror.

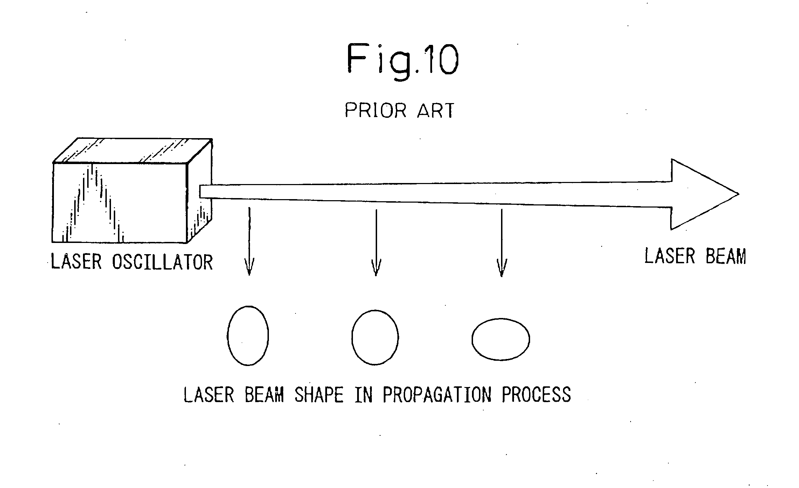

It is therefore considered appropriate to insert a curved surface, rather than a lens, as a turning mirror in the resonator. Examples of curved surfaces include, in addition to a spherical surface, a parabolic surface, a cylindrical surface and an elliptic surface; of these, the spherical surface is the best choice for economical and technical reasons. However, in the case of the spherical mirror, if the angle of incidence is large, astigmatism occurs, resulting in a phenomenon in which the energy distribution (beam profile) of the laser beam output from the oscillator becomes elliptical in shape. More specifically, as shown in Fig. 10, the laser beam shape changes as it propagates farther from the output mirror; for example, the beam shape is horizontally elongated at one point, but vertically elongated at another point.

As a result, if such a laser beam is gathered to a point by a light-gathering lens provided in the nozzle of a laser machining tool, only an elliptically shaped light spot can be obtained, and consequently, the machining result differs depending on the scanning direction of the machining table.

To solve this problem, the latter patent document, i.e., Japanese Unexamined Patent Publication No. 2002-118312, proposes a method that corrects the astigmatism by combining a concave mirror with a convex mirror. With this method, however, as the combinations of the curvatures of the concave mirror and the convex mirror are limited, the design freedom decreases. Another possible method to correct the astigmatism associated with the spherical mirror would be to reduce the angle of incidence on the spherical mirror. For example, if the angle of incidence on the spherical mirror is made smaller than 22.5 degrees, the effects of the astigmatism can be considerably reduced. However, the effects of the astigmatism essentially remain. Reducing the angle of incidence also results in reducing the design freedom of the laser oscillator.

### SUMMARY OF THE INVENTION

Accordingly, it is an object of the present invention to overcome the above-described problem of the prior art.

More specifically, according to the present invention, there is provided a laser oscillator having a resonator comprising an output mirror, a rear mirror, and a turning mirror for turning a laser beam axis between the output mirror and the rear mirror, wherein the turning mirror comprises a plurality of spherical mirrors, and the plurality of spherical mirrors are arranged so that light in a plane parallel to a plane of incidence on one of the plurality of spherical mirrors travels within a plane parallel to the laser beam axis and perpendicular to a plane of incidence on another one or ones of the plurality of spherical mirrors.

Here, the term "plane of incidence on a spherical mirror" refers to the "plane formed by the bending of the optical axis associated with the reflection of the laser beam at the spherical mirror," in other words, the "plane containing the optical axis of the incident laser beam and the optical axis of the reflected laser beam when the laser beam is reflected at the spherical mirror", which may be expressed as the "plane formed by the optical axis of the incident laser beam and the optical axis of the reflected laser beam when the laser beam is reflected at the spherical mirror".

The angle of incidence on each of the plurality of spherical mirrors can be set to 22.5 degrees or larger. In this patent specification, the term "angle of incidence of the laser axis on a spherical mirror" refers to the "angle that the optical axis of the laser beam incident on the spherical mirror (hereinafter called the "optical axis of the incident laser beam") makes with the normal to the reflecting surface (concave surface) of the spherical mirror at a point at which the optical axis of the incident laser beam intersects the reflecting surface (spherical surface)."

It is preferable to select the curvatures of the reflecting mirrors in the resonator so that the combined focal length for the light lying or traveling in the plane parallel to the plane of incidence on one spherical mirror of the plurality of spherical mirror becomes substantially the same as the combined focal length for the light traveling within the plane parallel to the laser beam axis and perpendicular to that plane of incidence. Accordingly, when the turning mirror is constructed using two spherical mirrors positioned close to each other or disposed at positions symmetrical about the midpoint of the resonator length, the spherical mirrors should be chosen to have the same curvature.

Ideally, it is preferable to arrange the spherical mirrors at positions symmetrical about the midpoint of the resonator, but if they are not so arranged, a certain effect can be achieved in offsetting the astigmatism.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 is a diagram showing the arrangement of optical components forming a resonator in a laser oscillator according to the basic embodiment (first embodiment) of the present invention;
Figs. 2a and 2b are diagrams for explaining the behavior of light associated with reflections at two spherical mirrors A and B in the first embodiment, showing the reflection at the spherical mirror A and at the spherical mirror B, respectively;
Fig. 3 is a diagram showing the arrangement of optical components forming a resonator in a laser oscillator according to a second embodiment of the invention;
Figs. 4a and 4b are diagrams showing the resonator configuration of a laser oscillator according to a third embodiment of the invention and the other showing for comparison a modified example of the prior art, respectively;
Fig. 5 is a diagram showing the resonator configuration of a laser oscillator according to a fourth embodiment of the invention;
Fig. 6 is a diagram showing the resonator configuration of a laser oscillator according to a fifth embodiment of the invention;
Figs. 7a and 7b are diagrams showing the resonator configurations of a laser oscillator according to a sixth and a seventh embodiments of the invention, respectively;
Figs. 8a, 8b and 8c are views of the resonator configuration of a laser oscillator according to an eighth embodiment of the invention, showing a perspective view, a side view as seen from the direction indicated by arrow AR1 and a side view as seen from the direction indicated by arrow AR2 (from the output mirror side), respectively;
Fig. 9 is a diagram showing the resonator configuration of a laser oscillator according to a ninth embodiment of the invention; and
Fig. 10 is a diagram showing how the cross-sectional shape of a laser beam changes as the laser beam propagates farther from an output mirror.

### DETAILED DESCRIPTIONS

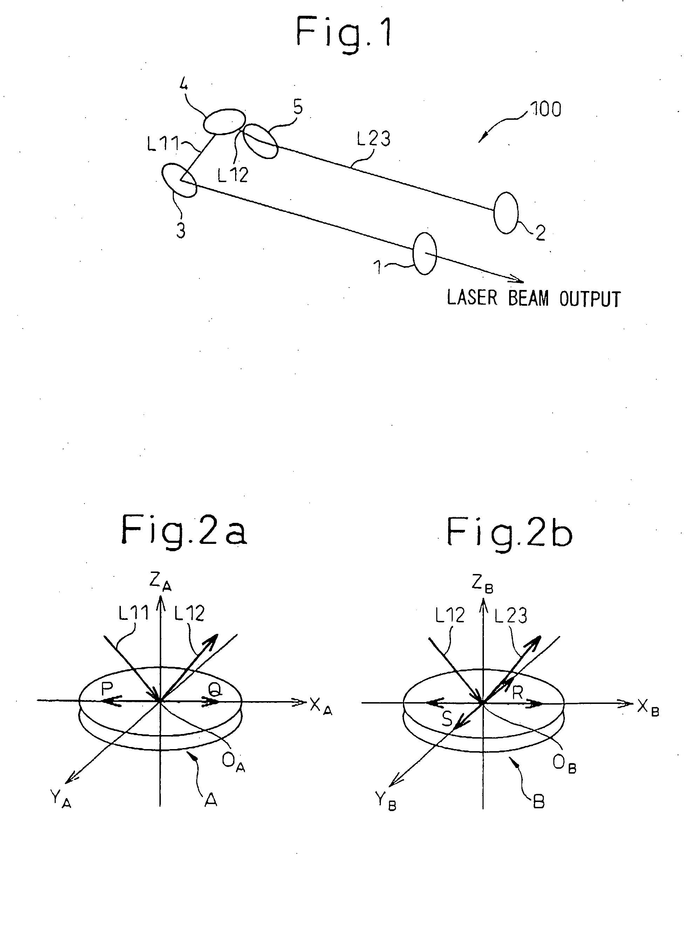

Embodiments of the present invention will be described below with reference to Figures 1 to 9. To facilitate understanding, many component elements that are not particularly relevant to the features of the invention are omitted, and only the major component elements (output mirror, rear mirror and turning mirrors) of the optical system forming a resonator are shown in each diagram together with the optical axis of the laser beam that travels back and forth within the resonator. Further, for convenience, the turning mirrors will be referred to as a first turning mirror, a second turning mirror, and so on in the order in which they are arranged along the optical path of the resonator as viewed from the output mirror side.

Fig. 1 shows the arrangement of the optical components forming a resonator 100 in a laser oscillator according to the basic embodiment of the present invention (hereinafter also called the first embodiment). As shown, the optical components forming the optical resonator 100 include an output mirror 1, a first turning mirror 3, a second turning mirror 4, a third turning mirror 5 and a rear mirror 2. Laser light may be excited at any point within the resonance space between the output mirror 1 and the rear mirror 2, but generally, a discharge space (in the case of a gas laser) or a laser rod (in the case of a solid laser) is often provided where the spacing between the reflecting mirrors is wide.

In a conventional laser oscillator, every turning mirror is constructed using a plane mirror, but in the oscillator according to the present invention, the plurality of turning mirrors include a plurality of spherical mirrors. In the embodiment, the first turning mirror 3 is constructed from a plane mirror, but the second and the third turning mirrors 4 and 5 are constructed from spherical mirrors A and B, respectively. In a typical example, both of the spherical mirrors A and B are concave mirrors with a radius of curvature, of 30 m. The spherical mirrors A and B are positioned and oriented so that the laser beam is incident on each mirror at an angle of 45 degrees. In other words, the optical axis of the laser beam is deflected by 90 degrees by being reflected at each of the spherical mirrors A and B.

In this case, the plane of incidence on the spherical mirror A and the plane of incidence on the spherical mirror B are perpendicular to each other. The output mirror 1 and the rear mirror 2 are both concave mirrors whose radius of curvature is, for example, 15 m. The suitable range for the curvature differs depending on the length of the resonator and the diameter of the aperture.

When laser oscillation is produced using the above oscillator, a laser beam substantially symmetrical about the axis is generated within the resonator. The laser beam travels back and forth between the output mirror 1 and the rear mirror 2, and part of the beam emerges through the output mirror 1. Reflections occur at the turning mirrors 3 to 5, but the turning mirror 3 constructed from a plane mirror exerts only a simple light deflecting effect (bending), free from converging or diverging, on the laser beam. On the other hand, reflections at the turning mirrors 4 (spherical mirror A) and 5 (spherical mirror B) involve a converging effect. Here, astigmatism which affects the axial symmetry of the beam profile will be examined with reference to Figs. 2a and 2b.

First, referring to Fig. 2a, when the optical axis of the laser beam incident on the spherical mirror A is denoted by L11 and the optical axis of the reflected laser beam by L12, the laser beam axis is bent at a point of incidence O_{A} at which the laser beam with the optical axis L11 is incident on the spherical surface. As previously defined, the plane containing the straight lines L11 and L12 forms the plane of incidence on the spherical mirror A. Usually, the spherical mirror A is placed so that the point of incidence O_{A} substantially coincides with the center of the reflecting surface.

On the other hand, in Fig. 2b, the optical axis of the laser beam incident on the spherical mirror B is L12 and the optical axis of the reflected laser beam is denoted by L23. Here, the laser beam axis is bent at a point of incidence O_{B} at which the laser beam with the optical axis L12 is incident on the spherical surface. As previously defined, the plane containing the straight lines L12 and L23 forms the plane of incidence on the spherical mirror B. Usually, the spherical mirror B is placed so that the point of incidence O_{B} substantially coincides with the center of the reflecting surface.

Here, for convenience, the point of incidence O_{A} is taken as the origin, the normal to the reflecting surface at the point of incidence O_{A} is taken as Z_{A} axis and a Cartesian coordinate system is defined so that the plane of incidence coincides with the X_{A}Z_{A} plane, as shown in Fig. 2a. The angle of incidence of the laser beam axis is the angle that the optical axis L11 makes with the Z_{A} axis.

Of the laser light rays passing the spherical mirror A, the rectangular-shaped laser light traveling in the plane of incidence is reflected near a line segment PQ (a short line segment traveling on the X_{A} axis and having its midpoint at the origin O_{A}). In Fig. 2b, the incidence line (a set of incidence points, or strictly speaking, an arc) formed when the reflected light (thin plate-like light) is incident on the spherical mirror B is approximated by a line segment RS. In other words, the light reflected near the line segment PQ on the reflecting mirror A passes near the line segment RS on the reflecting mirror B. The line segment RS is a short line segment passing through the point of incidence O_{B} of the laser beam axis on the spherical mirror B.

At this point, as in the case of the spherical mirror A, the point of incidence O_{B} is taken as the origin, the normal to the reflecting surface at the point of incidence O_{B} is taken as Z_{B} axis and a Cartesian coordinate system is defined so that the plane of incidence, i.e., the plane containing the laser beam axes L12 and L23, coincides with the X_{B}Z_{B} plane. The angle of incidence of the laser beam axis is the angle that the optical axis L12 makes with the Z_{B} axis.

The orientation of the line segment RS in the coordinate system naturally changes with the orientation (the direction of the Z_{B} axis) of the spherical mirror B. In the embodiment, the orientation of the spherical mirror B is determined so that the line segment RS lies on the Y_{B} axis, as shown in Fig. 2b. Stated another way, the Y_{B} axis is parallel to the Z_{A}X_{A} plane. As a result, the light in one plane (containing the line segments PQ and RS) parallel to the plane of incidence (Z_{A}X_{A} plane) on the spherical mirror A travels within a plane perpendicular to the plane of incidence (Z_{B}X_{B} plane) on the spherical mirror B and parallel to the laser beam axis L12. In other words, the spherical mirrors A and B are arranged so as to satisfy such a condition.

In this arrangement, the astigmatisms associated with the spherical mirrors A and B are offset as will be described below and the axial symmetry of the laser beam profile can be substantially maintained.

Generally, when light is incident obliquely on a spherical mirror (or the angle of incidence is not 0 degree), the focal length for the light in the plane of incidence and the focal length for the light in a plane perpendicular to it are different and are asymmetrical about the optical axis (this is so called an astigmatism effect due to oblique incidence). Under the conditions of the embodiment, the focal length for the light in the plane of incidence (the light reflected on or near the X_{A} axis) is 30/81/2, however, the focal length for the light in the plane perpendicular to it (the light reflected on or near the Y_{A} axis) is 30/21/2. On the other hand, the spherical mirror B also exhibits a similar asymmetry for the focal lengths of the respective beams of light, otherwise, between the spherical mirrors A and B, the X and Y directions are interchanged because of the orientations described above.

Therefore, the combined focal length of the spherical mirrors A and B is the same for the light reflected on or near the X_{A} axis as for the light reflected on or near the Y_{B} axis, and the astigmatism is thus offset. This serves to prevent the profile of the output laser beam from becoming elliptical and, a laser beam highly symmetrical about the optical axis can be obtained. Further, in the case of an infrared laser whose light wavelength is long, diffraction also becomes a problem but, as the above arrangement provides a similar offset effect, the effects of other aberrations that astigmatism are also reduced, thus achieving a further enhanced offset effect. In this way, according to the embodiment, a laser beam symmetrical about the optical axis can be obtained.

As described above, according to the present embodiment, by ingeniously arranging the plurality of spherical mirrors, the astigmatism may be offset so as to obtain a laser beam symmetrical about the optical axis. Furthermore, even when the resonator length is long, the alignment of the optical axis can be easily adjusted and a laser oscillator can be achieved that has a wide adjustment range and that produces a stable output. In particular, in the embodiment, the above effect is further enhanced because the reflecting mirrors are arranged symmetrically with respect to the longitudinal direction of the resonator.

In the arrangement shown in Fig. 1, the same effect as described above can also be obtained if not only the second and the third turning mirrors 4 and 5 (spherical mirrors A and B), but the first turning mirror 3 also is constructed as a spherical mirror. In that case, the light in the plane of incidence on the spherical mirror A travels within a plane parallel to the laser beam axis and perpendicular to the planes of incidence on the first and the third spherical turning mirrors. Then, by choosing both of the first and the third turning mirrors to have curvatures of 60 m, the combined focal length equivalent to that achieved in the earlier described example can be obtained.

In many cases, a polarization selective reflecting mirror is used as the first turning mirror 3 and, the direction of polarization of the laser beam to be output from the laser oscillator is determined by absorbing the polarization component parallel to the plane of incidence and increasing reflectivity for the polarization component perpendicular to it. For laser cutting, in particular, for metal cutting, a circularly polarized laser beam which is not confined to any one particular direction is preferred for use. This may be accomplished by using a phase retarding reflective mirror which converts the linearly polarized light output from the oscillator into circularly polarized light. In that case, as the phase retarding reflective mirror must be maintained in a prescribed orientation relationship to the direction of polarization, it is required that the direction of polarization of the laser beam output from the laser oscillator is stable.

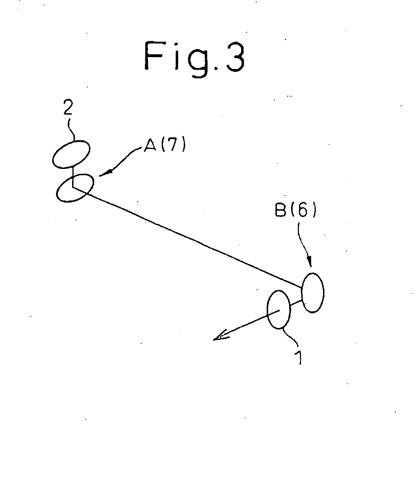

In view of this, provisions are made to avoid oscillations due to randomly polarized light and to obtain stable linearly polarized light even when the resonator is the simplest in configuration, as shown in Fig. 3. In the arrangement shown in Fig. 3, the present invention can also be applied and this implementation will be described below as a second embodiment. In the second embodiment, the output mirror 1 and the rear mirror 2 are immediately preceded by a spherical mirror B (a turning mirror 6) and a spherical mirror A (a turning mirror 7), respectively. Of the two mirrors, one mirror (in the illustrated example, the turning mirror 6) is constructed as a polarization selective reflecting mirror (spherical mirror B) and the other mirror 7 is constructed as a zero shift mirror (spherical mirror A) provided with a coating that does not change phase or reflectivity whatever the direction of polarization is. The radius of curvature of each of the spherical mirrors (concave mirrors) A and B is typically 10 m.

The spherical mirrors A and B are positioned and oriented so as to satisfy the same condition as the spherical mirrors A and B described in the foregoing first embodiment. That is, the spherical mirrors 6 and 7 are arranged so that the planes formed by the optical axis of the incident laser beam and the optical axis of the reflected laser beam on the respective spherical mirrors A and B are perpendicular to each other, thereby offsetting the astigmatism and preventing the axial symmetry of the output laser beam profile from degrading. There will be no problem if the distance, between the spherical mirrors arranged so as to offset the astigmatism, makes up a large proportion relative to the length of the resonator, as shown in the second embodiment.

The resonator thus constructed offers the following advantages.

First, a generally linearly polarized output whose polarization direction is constant can be obtained. Next, by suitably selecting the curvatures of the spherical mirrors A and B, the inside curvatures of the output mirror 1 and the rear mirror 2 can be made extremely small (the curvature radii can be increased virtually to infinity). This serves to reduce the costs of the output mirror 1 and the rear mirror 2 which frequently need replacing. Generally, the larger the curvature, the higher becomes the cost of a spherical mirror. In particular, as the output mirror which is a transmissive optical component (a partially transmissive mirror) frequently needs replacing, the reduction of the cost is of great significance.

There is also the advantage of being able to use an output mirror made of synthetic diamond for which the achievable curvature is limited. As the output mirror made of synthetic diamond has extremely high thermal conductivity, the thermal lens effect becomes very small, making this type of output mirror suitable for use in a high-power laser oscillator. However, it is difficult to provide a curved surface because the material is very hard. In the present embodiment, it is possible to use a diamond output mirror having a flat plane surface, that is, the curvature of the mirror is zero.

Strictly speaking, in such a resonator, the beam waist position differs between the X-axis direction (parallel to the plane of incidence) and the Y-axis direction (perpendicular to the plane of incidence) when the beam passes the spherical mirror A. However, this positional asymmetry can be ignored for the following two reasons. The first reason is that, since the reflecting mirror used inside the laser resonator generally has a very large curvature and a long focal length, the beam waist portion (Rayleigh region) becomes long due to the effect of diffraction. The second reason is that, inside the resonator, unlike the case of the propagation of light in one direction, the smaller the amount of light passing through a region, the larger the laser gain becomes in that region, thus acting to make up for the darker region.

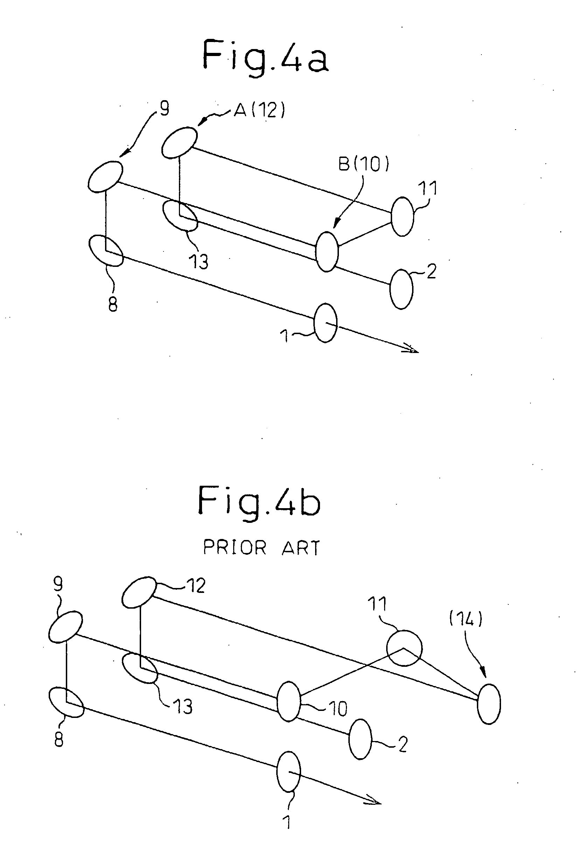

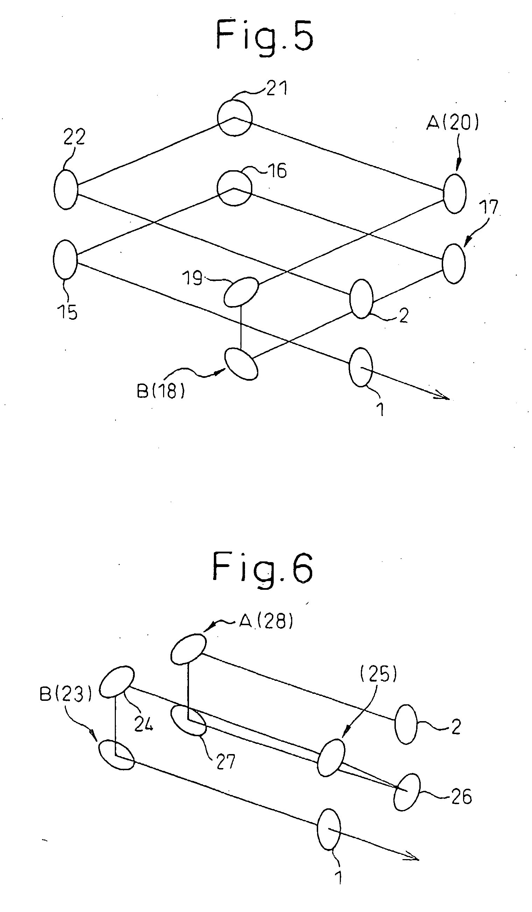

Depending on conditions, the present invention can also be applied to existing laser oscillators by simply replacing mirrors. Such examples will be described briefly as a third and a fourth embodiments with reference to Figs. 4a and 4b and Fig. 5, respectively. First, in the example shown in Fig. 4a, a total of six turning mirrors 8 to 13 are arranged between the output mirror 1 and the rear mirror 2, the configuration being such that the output mirror 1 and the first to the third turning mirrors 8 to 10 are disposed in the same horizontal plane, while the fourth to the sixth turning mirrors 11 to 13 and the rear mirror 2 are disposed in another horizontal plane higher than that. Such an arrangement itself is just one example of the resonator configuration of existing laser oscillators.

To apply the present invention to the illustrated arrangement, some (two or more) of the turning mirrors 8 to 13 are replaced by spherical mirrors. In the third embodiment shown here, the third turning mirror or a plane mirror 10, is replaced by the spherical mirror B, and the fifth turning mirror or a plane mirror 12, is replaced by the spherical mirror A. The spherical mirrors B and A are chosen to have the same curvature radius, and their positions and orientations are determined so that the light beams in the planes of incidence on the respective spherical mirrors B and A are perpendicular to each other.

In the example shown in Fig. 5, a total of eight turning mirrors 15 to 22 are arranged between the output mirror 1 and the rear mirror 2, the configuration being such that the output mirror 1 and the first to the third turning mirrors 15 to 17 are disposed in the same horizontal plane, while the fourth to the sixth turning mirrors 18 to 20 are disposed in another horizontal plane higher than that, furthermore, the seventh and the eighth turning mirrors 21 and 22 and the rear mirror 2 are disposed in another horizontal plane further higher than that. Such an arrangement itself is just one example of the resonator configuration of the existing laser oscillator.

To apply the present invention to the illustrated arrangement, some (two or more) of the turning mirrors 15 to 22 are replaced by spherical mirrors. In the fourth embodiment shown here, the fourth turning mirror or a plane mirror 18 is replaced by the spherical mirror B, and the sixth turning mirror or a plane mirror 20 is replaced by the spherical mirror A. The spherical mirrors B and A are chosen to have the same curvature radius, and their positions and orientations are determined so that the light beams in the planes of incidence on the respective spherical mirrors B and A are perpendicular to each other.

In this example also, a conspicuous effect can be obtained by just inserting the spherical mirrors B and A, but if the third and the fifth turning mirrors 17 and 19 are also replaced by spherical mirrors in the arrangement shown in Fig. 5, the structure becomes symmetrical along the entire length of the resonator, so that an almost perfect axially symmetric laser beam can be obtained. In this way, as the present invention may be applied to existing oscillators, the advantage is that an oscillator having the intended light-gathering performance can be easily developed.

In the arrangement of Fig. 4a, in the prior art there has been no choice but to use an axially asymmetric laser beam by using only the spherical mirror A, or to obtain an axially symmetric laser beam by applying a modification as shown in Fig. 4b, that is, by adding a spherical mirror 14 having a small incidence angle, thereby reducing the astigmatism. By contrast, in the third and the fourth embodiments, the axial symmetry is maintained, and there is no particular need to reduce the angle of incidence on each spherical mirror.

Further, as shown in the third and the fourth embodiments, it should be understood that the spherical mirrors positioned and oriented so as to offset the astigmatism need not be arranged adjacent to each other.

Next, Fig. 6 shows an example in which the arrangement of Fig. 3 (or the second embodiment) is folded. This example will be described as a fifth embodiment. In this arrangement, a total of six turning mirrors 23 to 28 are arranged between the output mirror 1 and the rear mirror 2. Of these turning mirrors, the first turning mirror 23 and the sixth turning mirror 28 are the spherical mirrors B and A, respectively, whose curvature radii are the same. The other turning mirrors 24 to 27 are plane mirrors. However, the third turning mirror 25 is constructed as a polarization direction selective mirror which determines the direction of polarization of the laser beam that the laser oscillator outputs. As shown in this embodiment, the present invention offers a wide range of applications at it does not impose severe constraints on the arrangement of the spherical mirrors.

In the first to the fifth embodiments thus far described (see Figs. 1 and 3 to 6), the laser beam axes virtually do not cross each other. This is because the description has been given by assuming the fast axial-flow type in the case of the gas laser and the cylindrical rod type in the case of the solid laser. Therefore, it should not be understood that the present invention cannot be applied to laser oscillators of the type in which the laser beam axes cross each other.

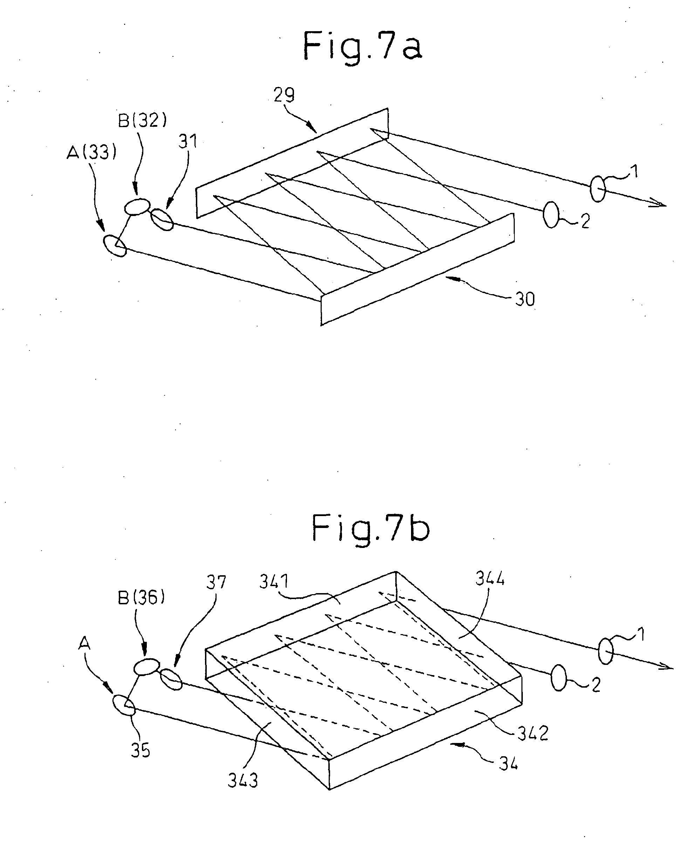

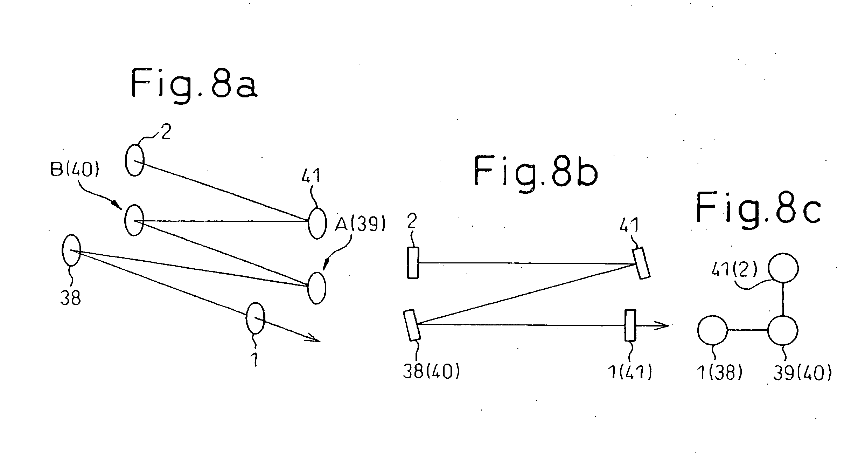

In the case of a gas laser, gas slab laser, or solid slab laser of three-axis orthogonal type as well, if a high output is to be achieved, there naturally arises a need to increase the length of the resonator. However, as in the case of the laser oscillators of other types, if the length of the resonator is increased, it becomes difficult to obtain the intended light-gathering performance and/or to adjust the alignment of the resonator, giving rise to the problem that the output/oscillation mode does not stabilize. The present invention can provide an effective solution to such a problem. Examples will be briefly described with reference to Figs. 7a, 7b and 8a to 8c.

First, Fig. 7a shows an arrangement according to a sixth embodiment in which a total of five turning mirrors 29 to 33 are arranged between the output mirror 1 and the rear mirror 2. Of these turning mirrors 29 to 33, the first to the third turning mirrors 29 to 31 are plane mirrors, while the fourth and the fifth turning mirrors 33 and 34 are constructed from the spherical mirror B and the spherical mirror A, respectively. As shown, a zigzag round-trip optical path where the optical axes cross in the same plane is provided.

This configuration achieves the same effect as if lenses were arranged between the ends of a very long resonator, whereby the light-gathering performance of the laser beam may be controlled by the output mirror, the rear mirror and the curvatures of the respective turning mirrors. Further, in the illustrated example, when the laser light passes the third to the fifth turning mirrors 31 to 33, the horizontal direction and the vertical direction are transposed in a primary laser exciting space, offering the effect of resolving the optical asymmetry unique to this type of oscillator.

The spherical mirrors B and A are positioned and oriented so as to satisfy the same condition as the spherical mirrors A and B described in the first embodiment. That is, the spherical mirrors B and A are arranged so that the planes formed by the optical axis of the incident laser beam and the optical axis of the reflected laser beam on the respective spherical mirrors B and A are perpendicular to each other, thereby offsetting the astigmatism and preventing the axial symmetry of the output laser beam profile from degrading. In the illustrated example, by constructing, for example, the third turning mirror 31 as a polarization direction selective mirror, the direction of polarization of the laser light to be output from the laser oscillator may be determined.

Fig. 7b shows an arrangement according to a seventh embodiment. The example shown here employs a technique similar to that used in the foregoing sixth embodiment, and corresponds to a modified example of the sixth embodiment. That is, in the arrangement shown in Fig. 7b, the first and the second turning mirrors 29 and 30 (both are plane mirrors) in the sixth embodiment are replaced by a slab crystal (or a laser crystal) 34. The internal reflection function of a pair of opposing side faces 341 and 342 of the slab crystal 34 may be used as a replacement for the turning mirror function. As shown, this slab crystal 34 provides a zigzag round-trip optical path where the optical axes cross in the same plane. In this regard, reflectivity may be increased by depositing, for example, silver on the side faces 341 and 342. The light enters and leaves the slab crystal 34 through the other side faces 343 and 344.

Then, in common with the sixth embodiment, the spherical mirrors B and A are used for the second and the third turning mirrors 36 and 35, respectively. In this example also, the same advantage as offered in the sixth embodiment can be obtained. That is, the illustrated configuration is equivalent to arranging lenses between the ends of a very long resonator, whereby the light-gathering performance of the laser beam may be controlled by the output mirror, the rear mirror and the curvatures of the respective turning mirrors. Further, when the laser light passes the first to the third turning mirrors 35 to 37, the horizontal direction and the vertical direction are transposed in a primary laser exciting space, offering the effect of resolving the optical asymmetry unique to this type of oscillator. The spherical mirrors B and A here may be positioned and oriented in the same manner as the spherical mirrors B and A described above.

In this way, the sixth and the seventh embodiments show that the present invention is effective in application not only to fast axial-flow gas laser oscillators but also to three-axis orthogonal gas lasers and solid slab lasers. In particular, the invention provides a very useful technique in that the pair of spherical mirrors also acts to resolve the optical asymmetry in the primary exciting region.

Next, the resonator configuration of a laser oscillator according to an eighth embodiment will be described with reference to Figs. 8a to 8c which show a perspective view, a side view as seen from the direction indicated by arrow AR1 and a side view as seen from the direction indicated by arrow AR2 (from the output mirror side), respectively.

In the illustrated arrangement, a total of four turning mirrors 38 to 41 are arranged between the output mirror 1 and the rear mirror 2. Of these turning mirrors, the second and the third turning mirrors 39 and 40 are constructed from the spherical mirrors A and B, respectively. The spherical mirrors A and B are positioned and oriented so as to satisfy the same condition as the spherical mirrors A and B described in the first embodiment. That is, the spherical mirrors B and A are arranged so that the planes formed by the optical axis of the incident laser beam and the optical axis of the reflected laser beam on the respective spherical mirrors A and B are perpendicular to each other, whereby offsetting the astigmatism and preventing the axial symmetry of the output laser beam profile from degrading.

One feature of this arrangement is that the angle of incidence on each turning mirror may be reduced, as can be seen among others from the side view of Fig. 8b. Accordingly, even when only the second turning mirror 39 is constructed from a spherical mirror, a laser beam substantially symmetric about the axis can be obtained. However, to enhance the axial symmetry, the spherical mirror B should also be used in addition to the spherical mirror A. A nearly perfect axially symmetric laser beam offers a great advantage in application to high-precision laser machining.

The first to the eighth embodiments have been described on the assumption that concave mirrors, for example, are used for the spherical mirrors. However, using concave mirrors for the spherical mirrors is not an essential requirement of the present invention. If the spherical mirrors are convex mirrors, the situation is the same as in the case of "concave mirrors" in the sense that each mirror exhibits astigmatism, and thus exactly the same offsetting principle as that described with reference to Fig. 2 can be applied here. Accordingly, the present invention can also be applied to laser oscillators in which convex mirrors are used to correct the beam shape. It is also possible to obtain a combined effect by using a concave mirror in combination with a convex mirror. In one possible resonator configuration, the angle of incidence is varied between the turning mirrors and the curvature of the concave mirror is also varied accordingly.

The present invention can also be applied to the configuration in which turning mirrors with variable curvatures are used. The previously cited Japanese Unexamined Patent Publication No. 2002-118312 discloses a technique for controlling the light-gathering performance of a laser beam by inserting turning mirrors with variable curvatures in the resonator. If this technique is combined with the present invention, not only can the light-gathering performance be controlled as described above, but a particularly useful effect can be achieved as described below. That is, with the technique disclosed in Japanese Unexamined Patent Publication No. 2002-118312, control has had to be performed by associating the curvature of the concave mirror with the curvature of the convex mirror for absorption of astigmatism and other reasons. However, according to the present invention, it is only necessary to provide a set of concave mirrors (or convex mirrors) having variable curvatures and identical in structure and characteristic. This not only serves to greatly increase the accuracy of control, but also offers an economic advantage such as a reduction in the number of control systems.

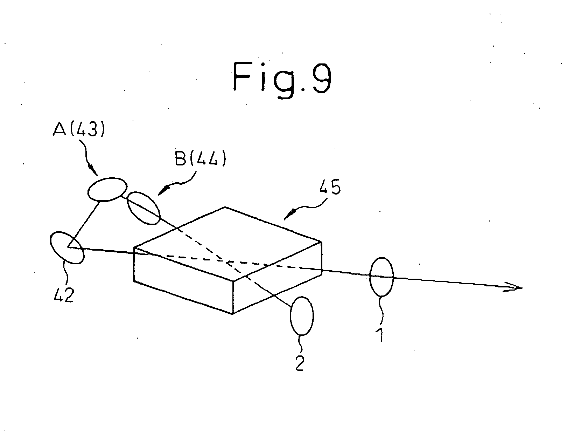

Finally, a ninth embodiment will be described with reference to Fig. 9 which shows an example that can achieve, albeit incompletely, the effect of the present invention. In this embodiment, first to third turning mirrors 42 to 44 and a slab crystal (or a laser crystal) 45 are arranged between the output mirror 1 and the rear mirror 2. The first turning mirror 42 is a plane mirror, while the second and the third turning mirrors 43 and 44 are constructed from the spherical mirrors A and B, respectively. The resonance optical path passes through the slab crystal (or the laser crystal) 45 between the output mirror 1 and the first turning mirror 42 and between the rear mirror 2 and the third turning mirror 44. The laser is excited in the slab crystal 45. One feature of this arrangement is that a small angle is formed between the optical axis directed toward the output mirror 1 and the optical axis directed toward the rear mirror 2. In this case, the light in the plane of incidence on the spherical mirror A does not travel exactly perpendicularly to the plane of incidence on the other spherical mirror B. Nevertheless, the astigmatism is offset to some degree, and the effect of the prevent invention may be expected. According to an experiment, it was shown that if the deviation from the perpendicularity between the planes of incidence is within about 15 degrees, it does not cause an appreciable problem in terms of laser machining performance.

As described above, the present invention is intended to provide a laser oscillator that can suppress astigmatism and achieve an axially symmetric laser beam output profile even when a spherical mirror is inserted between the output mirror and the rear mirror in order to control the light-gathering performance of the laser beam. Further, in the case of a laser oscillator having a very long resonator, an adjustment failure may easily occur even when the optical axis is slightly displaced (misalignment). This not only reduces the laser output, but also degrades the light-gathering performance. The present invention can solve this problem while overcoming the earlier described problem, and thus achieves stable output and light-gathering performance.

Further, in a laser oscillator of the type in which the light-gathering performance of the beam is controlled by arranging a spherical mirror at an intermediate position along the laser beam axis, the present invention solves the described problem by arranging the plurality of spherical mirrors in such a manner as to offset the astigmatism. That is, according to the present invention, as the plurality of spherical mirrors are arranged so that the planes formed by the optical axis of the incident laser beam and the optical axis of the reflected laser beam on the respective spherical mirrors are perpendicular to each other, the astigmatism is offset and the axial symmetry of the output laser beam profile is prevented from degrading.

In the laser oscillator according to the present invention, the astigmatisms associated with the respective spherical mirrors offset each other, and, thus, the directional dependency of the combined focal length in the resonator is reduced. Therefore, the laser beam output from the laser oscillator may be substantially symmetrical about the axis. Here, the spherical mirrors need not be arranged close to each other, but may be disposed some distance away from each other, in which case also, the same effect can be achieved. This is because the light travels back and forth in both directions within the laser resonator. In this regard, the situation differs from the case of conventional optical systems. Further, as the light travels back and forth in both directions, it is desirable that the curvatures of the spherical mirrors, etc. be made symmetrical about the midpoint of the resonator length, and by so doing, uniform laser oscillations can be achieved. Even if the curvatures are not made symmetrical for design reasons, as the combined focal length in the resonator as a whole is the same regardless of the direction of the laser beam axis, a certain degree of effect can be expected in achieving uniform laser oscillations and obtaining an axially symmetric laser beam.

Further, in a laser oscillator constructed using discharge tubes, it is advantageous, in terms of design, to arrange the discharge tubes in parallel or at right angles to each other. This is because they tend to physically interfere with each other due to the size of the flange portions sealing the ends of the discharge tubes and because it is difficult to provide a distance for electrical insulation due to the presence of a region where the electrode spacing is reduced. According to the present invention, as the astigmatism can be offset even when the angle of incidence is large, the angle of incidence on each turning mirror may be made large. Further, a feature that allows the arrangement where the angle of incidence is 22.5 degrees or larger, that is, the direction of deflection is 45 degrees or larger, offers a great advantage.

As described above, according to the invention, by ingeniously arranging the plurality of spherical mirrors, astigmatism may be offset and a laser beam symmetrical about the optical axis can be obtained. Furthermore, even when the resonator length is long, a laser oscillator can be achieved that can easily adjust the alignment of the optical axis, has a wide adjustment range, and produces a stable output.

While the invention has been described with reference to specific embodiments chosen for the purpose of illustration, it should be apparent that numerous modifications could be made thereto, by one skilled in the art, without departing from the basic concept and scope of the invention.

## Claims

1. A laser oscillator having a resonator (100) comprising:
an output mirror (1);
a rear mirror (2); and
a turning mirror (3, 4, 5) for reflecting a laser beam axis of a laser excited between the output mirror (1) and the rear mirror (2),
wherein the turning mirror (3, 4, 5) comprises a plurality of spherical mirrors (4, 5; 3, 4, 5), the plurality of spherical mirrors (4, 5; 3, 4, 5) being arranged so that light traveling in a plane parallel to a plane of incidence on one of the plurality of spherical mirrors (4) travels within a plane parallel to the laser beam axis and perpendicular to a plane of incidence on another one or ones of the plurality of spherical mirrors (5; 3, 5) .

2. The laser oscillator as set forth in claim 1,
wherein the angle of incidence on each of the plurality of spherical mirrors (3, 4, 5) is equal to or larger than 22.5 degrees.

3. The laser oscillator as set forth in claim 1,
wherein the curvatures of the spherical mirrors (3, 4, 5) in the resonator are selected so that the combined focal length for the light traveling in the plane parallel to the plane of incidence on one spherical mirror (4) of the spherical mirrors (3, 4, 5) becomes substantially the same as the combined focal length for the light traveling within the plane parallel to the laser beam axis and perpendicular to that plane of incidence.

4. The laser oscillator as set forth in claim 1,
wherein the spherical mirrors (4, 5) are positioned at positions symmetrical about the midpoint of the resonator (100).

5. The laser oscillator as set forth in claim 4,
wherein the curvatures of the plurality of the spherical mirrors (4, 5) are the same.
